# EUROPÄISCHE PATENTSCHRIFT

(11) **EP 1 008 842 B1**
(45) Veröffentlichungstag und Bekanntmachung des Hinweises auf die Patenterteilung: **14.05.2008**
(21) Anmeldenummer: 99123541.7
(22) Anmeldetag: 26.11.1999
(51) Int. Cl.: G01N 1/22

(54) **Vorrichtung und Verfahren zur Entnahme von Abgasen**
Device and method for sampling gases
Dispositif et procédé d' échantillonnage de gas

(30) Priorität: 10.12.1998 DE 19857006
(43) Veröffentlichungstag der Anmeldung: 14.06.2000
(73) Patentinhaber: Air Liquide Deutschland GmbH, 40235 Düsseldorf (DE); Messer Group GmbH, 65843 Sulzbach (DE)
(72) Erfinder: Franke, Heinz, 47829 Krefeld (DE); Bosch, Joachim, 47647 Kerken (DE)
(74) Vertreter: Kahlhöfer, Hermann

(56) Entgegenhaltungen:
- EP-A- 0 085 139
- WO-A-95/28628
- US-A- 5 759 482

## Beschreibung

Die Erfindung betrifft eine Vorrichtung und ein Verfahren zur kontinuierlichen Entnahme von Abgasen und deren Analyse, insbesondere für staubhaltige Heißgase sowie ein Verfahren zur kontinuierlichen Entnahme von Abgasen, insbesondere für staubhaltige Heißgase.

Aus der WO 95/28628 ist eine wassergekühlte Entnahmesonde für staubbeladene Heißgasströme bekannt, bei der der eingesaugte Staub an Keramik-Filtern am Sondenkopf abgeschieden wird und bei der durch eine Gasspülung unter hohem Druck der Sondenkopf wieder gereinigt werden soll.

In der EP 0 135 205 ist eine wassergekühlte Gasentnahmesonde für staubbeladene Heißgase beschrieben, die durch die Umströmung eines sich verjüngenden Sondenkopfes die Einsaugung größerer Staubpartikel verhindern soll.

In der US 5 344 122 wird ein Verfahren zur Gasentnahme sowie Analyse eines staubbeladenen heißen Abgases beschrieben, bei dem das Heißgas entgegen dessen Anströmrichtung mit Hilfe einer wassergekühlten Entnahmesonde entnommen wird und durch ein bestimmtes Meß- und Regelungsverfahren den Analysegeräten zugeführt wird. Die Sonde kann anschließend durch eine Gasspülung unter hohem Druck freigeblasen werden. Aus US 5,759,482 ist eine Sonde bekannt, bei der eine statische Gasschicht aus Rauchgas zur Isolation genutzt wird.

Für eine Vielzahl von Betrieben mit Emissionen von einem staubbeladenen Heißgas, beispielsweise Stahlwerke, ist es von Vorteil, wenn die Standzeiten einer Analysemessung erhöht werden, da diese Messergebnisse oft als Steuergröße zur Ofensteuerung dienen.

In technischen Verbrennungsprozessen ist durch eine mangelnde Mischung der Reaktionspartner oder durch zu niedrige Temperaturen die Verbrennung teilweise nicht vollständig. Durch eine unvollständige Verbrennung können Restkohlenwasserstoffe und insbesondere Kohlenmonoxid entstehen, die dann in den Rauchgasen enthalten sind, was aus ökonomischen und ökologischen Gründen nachteilig ist.

Um teilweise unverbrannte Abgase bei einem schwankenden Luft- bzw. Sauerstoffbedarf umsetzen zu können und den Energieinhalt optimal nutzen zu können, ist eine möglichst aktuelle Beurteilung des Verbrennungsgrads erforderlich, um nach einer möglichst geringen Verzögerungszeit eine Nachverbrennung herbeizuführen. Eine Nachverbrennung kann beispielsweise durch das gezielte Einbringen von Sauerstoff in den Verbrennungsraum erfolgen.

Für eine geregelte Nachverbrennung ist eine Rauchgasanalyse unmittelbar hinter dem Ofen erforderlich. Dies führt zu Problemen bei der Entnahme der Rauchgase und einer daran anschließenden Analyse, da die direkt aus dem Ofen kommenden Rauchgase in der Regel noch eine sehr hohe Temperatur sowie Verunreinigungen aufweisen.

Aufgabe der Erfindung ist es, eine Vorrichtung und ein Verfahren zur kontinuierlichen Entnahme von Abgasen und deren Analyse, insbesondere für staubhaltige Heißgase, sowie ein Verfahren zur kontinuierlichen Entnahme dieser Abgase bereitzustellen, mit dem eine Messung über einen längeren Zeitraum möglich ist, ohne die Vorrichtung zu warten.

Die Aufgabe wird erfindungsgemäß gelöst durch eine Vorrichtung zur kontinuierlichen Entnahme von Abgasen, insbesondere für staubhaltige Heißgase, bestehend aus a) einer Entnahmesonde mit einer Öffnung, einer Abführungsleitung für das Meßgas, einer Zuführungsleitung für ein Spülmedium, einem Wassermantel, mindestens einer Strömungsbarriere zur Partikelabscheidung, b) einem Schutztopf, c) einer Spüleinheit mit Zuführungsleitungen für das Spülmedium, die dadurch gekennzeichnet ist, daß die Spüleinheit über die Zuführungsleitung für das Spülmedium mit der Abführungsleitung für das Meßgas sowie über die Zuführungsleitung für das Spülmedium mit der Entnahmesonde verbunden ist.

Die erfindungsgemäße Vorrichtung hat den Vorteil, daß im Gegensatz zu den bisher bekannten Verfahren selbst für heiße und staubbeladene Abgase lange Standzeiten realisiert werden.

Die wassergekühlte Entnahmesonde ist vorzugsweise aus einem hitzebeständigen Stahl als Werkstoff. Die Wasserkühlung wird so ausgelegt, daß sich eine ausreichende Wärmeabfuhr bzw. Werkstoffkühlung ergibt und ein rasches Abkühlen der Reaktion erfolgt.

Die Entnahmesonde ist der Abgasstromrichtung vorzugsweise entgegen gerichtet und in den Schutztopf eingeschoben, so daß ein schmaler Spalt entsteht, durch den das Abgas während der Meßzeit eingesaugt wird. Größere Partikel werden aufgrund ihrer Trägheit nicht eingesaugt.

Nach der Erfindung ist es vorgesehen, daß der Durchmesser der Abführungsleitung d_{B} für das Meßgas im Bereich des 1,2- bis 1,6-fachen Durchmessers d_{E} der Öffnung liegt.

Erfindungsgemäß liegt der Eingangsdurchmesser D des Schutztopfes im Bereich des 15- bis 20-fachen Durchmessers d_{E} der Öffnung der Entnahmesonde. Dies hat den Vorteil, daß die Strömungsgeschwindigkeit der eingesaugten Abgase im Schutztopf verlangsamt wird, so daß eine sehr rasche Temperaturerniedrigung der Gase im Schutztopf sichergestellt ist, wodurch eine Umwandlung von CO zu CO₂ verhindert wird. Ferner wird so die Einsaugung grober Partikel vermieden. Es ist erfindungsgemäß vorgesehen, die Gesamtlänge der Strömungsbarrieren so zu wählen, daß diese mindestens 75% des Umfanges, bezogen auf den Außendurchmesser d_{A} der Entnahmesonde, beträgt. Dies hat den Vorteil, daß die Einsaugung von Partikeln in die Entnahmesonde weitgehend verhindert wird. Unter dem Begriff "Srömungsbarrieren" sind hier insbesondere zur Strömungsrichtung der Abgase am Eingang in den Schutztopf in etwa senkrecht stehende Einbauten, beispielsweise Bleche, gemeint, wodurch das eintretende Abgas zu einer Änderung der Bewegungsrichtung gezwungen wird und wobei durch einen Aufprall auf die Strömungsbarrieren feste Stoffe aus dem Abgasstrom abgeschieden werden.

Es ist nach der Erfindung vorgesehen, daß 2 Strömungsbarrieren mit einer Länge von jeweils ca. 50 % des zwischen Außenfläche der Entnahmesonde und Innenfläche des Schutztopfes liegenden Ringspalts entlang der Sondenlängsachse zueinander versetzt angeordnet sind, wobei ihre beiden Flächen die Querschnittsfläche des Ringspalts vollständig abdecken. Vorzugsweise sind die erste Strömungsbarriere um das 0,8-fache bis 1,6-fache, besonders vevorzugt um ca. das 1,2-fache, des Schutztopfdurchmessers D und die zweite Strömungsbarriere um das 1,7- fache bis 2,5-fache, besonders bevorzugt um ca. das 2,1-fache des Schutztopfdurchmessers D vom Boden des Schutztopfes zurückgezogen. Dies hat zur Folge, daß beim Ausblasen die im Schutztopf abgelagerten Partikel wieder ausgetragen werden können.

Nach der Erfindung sind die Strömungsbarrieren als Abstandshalter zwischen Schutztopf und Entnahmesonde angeordnet. In der ringspaltförmigen Öffnung zwischen Schutztopfwandung mit Durchmesser D und Außenwandung der Entnahmesonde mit Außendurchmesser d_{A} sind die Strömungsbarrieren als ringsegmentartige Abstandshalter ausgebildet. Die Maßnahme führt dazu, daß vorteilhaft die Temperatur des angesaugten Abgases relativ homogen und sehr rasch verringert wird.

Erfindungsgemäß wird die Meßgasöffnung der Entnahmesonde nochmals durch mindestens eine Strömungsbarriere vor Verschmutzungen durch Staubpartikel geschützt. Als Strömungsbarriere können Einbauten verwendet werden, mit denen eine Partikelabscheidung möglich ist.

Erfindungsgemäß weist der Schutztopf einen Kühlwassermantel auf. Dadurch ergibt sich eine gute Wärmeabfuhr bzw. Werkstoffkühlung und die Reaktion wird schnell genug abgekühlt, um verlässliche Meßergebnisse ermitteln zu können.

Gemäß der Erfindung weist die Vorrichtung Steuerungseinrichtungen auf, um nach einem vorgegebenen Zeitzyklus die Abführungsleitung für das Meßgas mit einer Dauerspülung und die Entnahmesonde mit einer pulsierenden Spülung zu beaufschlagen. Daraus ergibt sich der Vorteil, daß auch die feinen Partikel, die in den Schutztopf eingesaugt werden, während der Spülzeit relativ sicher wieder ausgeblasen werden können.

Die Aufgabe wird ferner durch ein Verfahren zur kontinuierlichen Entnahme von Abgasen, insbesondere für staubhaltige Heißgase gelöst, bei dem einer Entnahmesonde über eine Abführungsleitung das Meßgas entnommen wird, über eine Zuführungsleitung ein Spülmedium zugeführt wird, bei dem die Entnahmesonde mit Hilfe eines Wassermantels gekühlt wird und bei dem mit Hilfe von mindestens einer Strömungsbarriere die Zufuhr des Heißgases in die Entnahmesonde so eingestellt wird, daß der zugeführte Volumenstrom des Abgases in die Entnahmesonde in einem Bereich zwischen 0,5 l/min. bis 5 l/min. liegt.

Durch die erfindungsgemäße Verfahrensweise wird vorteilhaft insbesondere an Lichtbogenöfen überraschend eine über längere Zeit kontinuierliche Messung bei relativ hohen Temperaturen bis ca. 1400 °C sowie gleichzeitig relativ hohe Staubbeladungen bis 250 g/Nm³ ermöglicht.

Erfindungsgemäß wird nach fest vorgegebenen Zeitzyklen die Abführungsleitung für das Meßgas gespült und die Entnahmesonde wird mit einer pulsierenden Spülung beaufschlagt. Die Maßnahme führt dazu, daß vorteilhaft die im Schutztopf abgeschiedenen Staubpartikel ausgeblasen werden.

Es ist nach der Erfindung vorgesehen, daß der Zeitzyklus für die Spülung mit Meßgas in einem Bereich von 5 bis 15 min. liegt. Durch diese Verfahrensweise wird vorteilhaft ein ausreichendes Ausblasen des Schutztopfes erreicht.

Nach der Erfindung liegt das Zeitintervall der pulsierenden Spülung in einem Bereich von 0,5 min. bis 2 min. Dies hat den Vorteil, daß sich die Partikel, die sich im "Schatten" von Strömungsbarrieren abgelagert haben, lösen und ausgetragen werden.

Das Volumen des Schutztopfes dient als Abscheide- und Abkühlungsraum der Abgase. Gemäß der Erfindung wird das gesamte Volumen des Schutztopfes in unter 10 sec. ausgetauscht.

Die Strömungsgeschwindigkeit der eingesaugten Abgase im Schutztopf liegt vorteilhaft zwischen 3 und 10 %, vorzugsweise ca. 6 %, der Strömungsgeschwindigkeit am Eintrittsende der Abgase in die Entnahmesonde.

Das erfindungsgemäße Verfahren und die Vorrichtung wird vorzugsweise verwendet für eine Messung des Abgases bei metallurgischen Schmelzprozessen, besonders bevorzugt bei Elektrolichtbogenöfen.

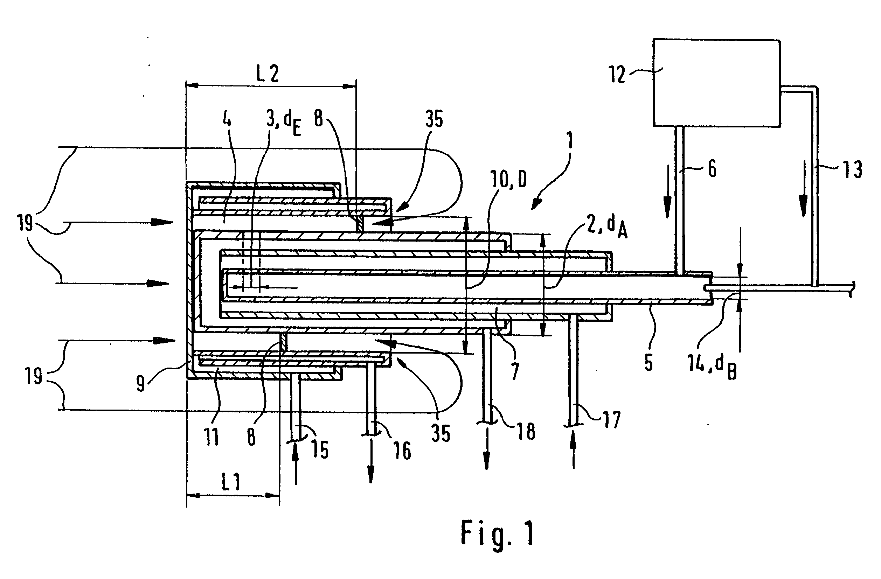

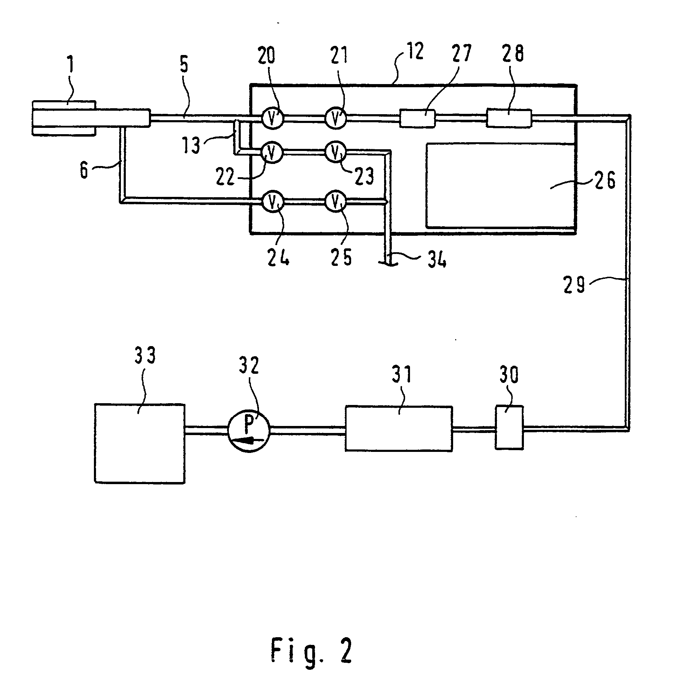

Die erfindungsgemäße Vorrichtung sowie das Verfahren werden nun anhand von Abbildungen (Fig.1 und Fig. 2) und Ausführungsbeispielen näher erläutert.

Die Fig. 1 zeigt beispielhaft eine Vorrichtung zur Meßgasentnahme.
In Fig. 2 ist eine Vorrichtung zur Durchführung des Verfahrens mit Analysevorrichtung und Gaszuführung dargestellt.

Die in Fig. 1 dargestellte Vorrichtung besteht aus einer Entnahmesonde (1) mit einem Außendurchmesser d_{A} (2), einer Öffnung (3) mit einem Durchmesser d_{E} (4), einer Abführungsleitung für das Meßgas (5), einer Zuführungsleitung für das Spülmedium (6), einem Wassermantel (7), mindestens einer Strömungsbarriere (8), einem Schutztopf (9) mit einem Eingangsdurchmesser D (10) und einem Wassermantel (11) und einer Spüleinheit (12) mit den Zuführungsleitungen für das Spülmedium (6) und (13). Der Durchmesser d_{B} (14) der Abführungsleitung (5) für Meßgas liegt im Bereich des 1,2- bis 1,6-fachen Durchmessers d_{E} (4) der Öffnung (3). Die Gesamtlänge der Strömungsbarrieren (8) zur Abscheidung von groben Partikeln beträgt mindestens 75% des Umfanges, bezogen auf den Außendurchmesser d_{A} (2) der Entnahmesonde (1). Die Strömungsbarrieren (8) sind als Abstandshalter zwischen Schutztopf (1) und Entnahmesonde (1) angeordnet. Der Eingangsdurchmesser D (10) des Schutztopfes (8) liegt im Bereich des 15- bis 20-fachen Durchmessers d_{E} (4) der Öffnung (3). Die Spüleinheit (12) ist über die Zuführungsleitung für das Spülmedium (13) mit der Abführungsleitung für das Meßgas (5) sowie über die Zuführungsleitung für das Spülmedium (6) mit der Entnahmesonde (1) verbunden ist. Dem Wassermantel (11) des Schutztopfes (9) wird über Leitungen (15,16) Wasser zu- bzw. abgeführt. Zum Zu- bzw. Abführen des Wassers in den Wassermantel (7) der Entnahmesonde (1) sind Leitungen (17, 18) angeordnet. Die Richtung des zu analysierenden Abgases ist hier durch die Pfeile (19) dargestellt. Die 2 Strömungsbarrieren (8) weisen eine Länge von jeweils ca. 50 % des zwischen Außenfläche der Entnahmesonde (1) und Innenfäche des Schutztopfes (9) liegenden Ringspalts (35) entlang der Sondenlängsachse zueinander versetzt angeordnet sind, wobei ihre beiden Flächen die Querschnittsfläche des Ringspalts (35) vollständig abdecken. Vorzugsweise sind die erste Strömungsbarriere (8) ca. um das 1,2-fache (L1) des Schutztopfdurchmessers D und die zweite Strömungsbarriere (8) ca. um das 2,1-fache (L2) des Schutztopfdurchmessers D vom Boden des Schutztopfes (9) zurückgezogen (hier nicht maßstäblich dargestellt). Die Strömungsbarrieren (8) sind als ringsegmentartige Abstandshalter zwischen Schutztopf (9) und Entnahmesonde (1) angeordnet.

In Fig. 2 ist in schematischer Form die Vorrichtung für die Meßungen sowie Steuer- und Regelungungen näher dargestellt. Die Entnahmesonde (1) ist mit der Spüleinheit (12) über die Zuführungsleitung für das Spülmedium (13) und mit der Abführungsleitung für das Meßgas (5) verbunden. Die Spüleinheit (12) weist Ventile(20, 21, 22, 23, 24, 25), vorzugsweise Magnetventile, und eine damit in Verbindung stehende elektronische Steuerung (26) zur Steuerung des Spülmediums und des Meßgases auf. Das entnommene Meßgas wird mit Hilfe eines Grobfilters (27) gereinigt, zum Beispiel ein Drahtfilter mit gegebenenfalls automatischem Kondensatablaß, über einen Druckwächter (28) und eine daran anschließende Leitung (29) einem Filter (30), beispielsweise Meßgasfilter, Meßgaskühler (31), zum Beispiel ein Peltierkühler, und einen daran anschließenden Verdichter (32), beispielsweise eine Membran-Pumpe, der Analyseeinrichtung (33) zugeführt.

Das Abgas wird in den Spalt zwischen Schutztopf (9) und Entnahmesonde (1) eingesaugt und kühlt dann rasch ab. Durch die Meßgasleitung (5) wird das Abgas zuerst der Spüleinheit (12) und dann der Analyseeinrichtung (33) zugeführt. Die Messung erfolgt nach einem bestimmten Zeitzyklus. Nach Ablauf der eingestellten Meß- und Nachlaufzeit wird die Entnahmesonde (1) und die Meßgasleitung (5) gespült. Während der Spülzeit wird das Spülmedium, zum Beispiel Luft oder Stickstoff über eine Leitung (34), über die Ventile (22, 23, 24 und 25) und durch die Spülgasleitungen (6, 13) in die Meßgasleitung (5) und in die Entnahmesonde (1) geleitet. Das Ausblasen der Meßgasleitung (5) kann durch eine Dauerspülung realisiert werden. Die durch die Meßgasleitung (5) verbundene Analyseeinrichtung (33) wird während der Spülzeit durch Ventile (20, 21) von der Meßgasleitung (5) getrennt, um die Analyseeinrichtung (33) zu schützen. Die Spülung der Entnahmesonde (1) erfolgt vorzugsweise pulsierend, wobei die Frequenz der Pulsation durch die Pausenzeit festgelegt wird. Die Pausenzeit beträgt vorzugsweise 0,5 sec. bis 3 sec.

Die Zeitschaltung wird elektronisch gesteuert durch eine speicherprogrammierte (SPS)-Steuerung oder durch eine Zeitrelais-Steuerung, wobei die Meßzeit (Zeit in der das Abgas über die Entnahmesonde (1), Spüleinheit (12) zur Analyseeinrichtung (33) geführt wird), die Spülzeit (Zeit in der die Entnahmesonde (1) und Meßgasleitung (5) gespült werden), die Nachlaufzeit (die Zeit in der der Druckabbau in den Spülleitungen (6, 13) zur Entnahmesonde (1) stattfindet) und die Pausenzeit (Zeit zwischen jeweils zwei pulsierenden Entnahmesondenspülungen) eingestellt werden können.

Als Spülmedium wird entweder Luft oder Stickstoff unter einem Vordruck von größer gleich 3 bar verwendet.

Die Meßgaszufuhr zur Analyseeinrichtung (33) wird nach dem vorgegebenen Zeitzyklus freigegeben. Der Druckwächter (28) verhindert, daß die Analyseeinrichtung (33) durch einen Druckstoß beschädigt wird. Das über das Filter (30), dem Meßgaskühler (31) und der Meßgaspumpe (32) der Analyseeinrichtung (33) zugeführte Meßgas wird auf die Stoffe CO, CO₂ und O₂ analysiert, da diese relativ stabil sind. Die Gasanalyse erfolgt über Analysegeräte nach dem Stand der Technik. Das Verfahren zur Sauerstoffanalyse arbeitet beispielseise unter Ausnutzung der paramagnetischen Eigenschaften des Sauerstoffmoleküls und als Meßverfahren zur Bestimmung der CO/CO₂-Gehalte kann beispielsweise eine IR-Absorptionsmeßung eingesetzt werden. Die gemessenen Werte werden verwendet, um dem Ofen gezielt Sauerstoff zuzuführen für eine vollständige Verbrennung. Die Sauerstoffzufuhr erfolgt vorzugsweise durch Lanzen und/oder Sauerstoff-Brenner.

## Patentansprüche

1. Vorrichtung zur kontinuierlichen Entnahme von Abgasen, insbesondere für staubhaltige Heißgase, bestehend aus
a) einer Entnahmesonde (1) mit einer Öffnung (3), einer Abführungsleitung für das Messgas (5), einem Wassermantel (7), mindestens einer Strömungsbarriere (8) zur Partikelabscheidung,
b) einem Schutztopf (9),
c) einer Spüleinheit (12) mit einer ersten (6) und einer zweiten Zuführungsleitung (13) für das Spülmedium,
**dadurch gekennzeichnet, dass** die Spüleinheit (12) über die zweite Zuführungsleitung (13) für das Spülmedium mit der Abführungsleitung (5) für das Messgas sowie über die erste Zuführungsleitung (6) für das Spülmedium mit der Entnahmesonde (1) verbunden ist.

2. Vorrichtung nach Anspruch 1,
**dadurch gekennzeichnet,**
**daß** der Durchmesser d_{B} der Abführungsleitung für das Meßgas (5) im Bereich des 1,2- bis 1,6-fachen Durchmessers d_{E} (4) der Öffnung (3) liegt.

3. Vorrichtung nach Anspruch 1 oder 2,
**dadurch gekennzeichnet,**
**daß** der Eingangsdurchmesser D (10) des Schutztopfes (8) im Bereich des 15- bis 20-fachen Durchmessers d_{E} (4) der Öffnung (3) der Entnahmesonde (1) liegt.

4. Vorrichtung nach einem der Ansprüche 1 bis 3,
**dadurch gekennzeichnet,**
**daß** die Gesamtlänge der Strömungsbarrieren (8) mindestens 75% des Umfanges, bezogen auf den Außendurchmesser d_{A} (2) der Entnahmesonde (1), beträgt.

5. Vorrichtung nach einem der Ansprüche 1 bis 4,
**dadurch gekennzeichnet,**
**daß** 2 Strömungsbarrieren mit einer Länge von jeweils ca. 50 % des zwischen Außenfläche der Entnahmesonde (7) und Innenfäche des Schutztopfes (9) liegenden Ringspalts (35) entlang der Sondenlängsachse zueinander versetzt angeordnet sind, wobei ihre beiden Flächen die Querschnittsfläche des Ringspalts (35) vollständig abdecken.

6. Vorrichtung nach Anspruch 5,
**dadurch gekennzeichnet,**
**daß** die erste Strömungsbarriere (8) ca. um das 1,2-fache (L1) des Schutztopfdurchmessers D und die zweite Strömungsbarriere (8) ca. um das 2,1-fache (L2) des Schutztopfdurchmessers D vom Boden des Schutztopfes - (9) zurückgezogen sind.

7. Vorrichtung nach einem der Ansprüche 1 bis 6,
**dadurch gekennzeichnet,**
**daß** die Strömungsbarrieren (8) als Abstandshalter zwischen Schutztopf (9) und Entnahmesonde (1) angeordnet sind.

8. Vorrichtung nach einem der Ansprüche 1 bis 7,
**dadurch gekennzeichnet,**
**daß** der Schutztopf (9) einen Kühlwassermantel (11) aufweist.

9. Vorrichtung nach einem der Ansprüche 1 bis 8,
**dadurch gekennzeichnet,**
**daß** die Vorrichtung Steuerungseinrichtungen aufweist, um nach einem vorgegebenen Zeitzyklus die Abführungsleitung für das Meßgas (5) mit einer Dauerspülung und die Entnahmesonde (1) mit einer pulsierenden Spülung zu beaufschlagen.

10. Verfahren zur kontinuierlichen Entnahme von Abgasen, insbesondere für staubhaltige Heißgase, bei dem einer Entnahmesonde (1) über eine Abführungsleitung (5) das Messgas entnommen wird, bei dem der Entnahmesonde (1) über eine erste Zuführungsleitung (6) ein Spülmedium zugeführt wird, während über eine zweite Zuführungsleitung (13) ein Spülmedium in die Abführungsleitung (5) für das Messgas geführt wird, bei dem die Entnahmesonde (1) mit Hilfe eines Wassermantels (7) gekühlt wird, bei dem mit Hilfe von mindestens einer Strömungsbarriere (8) die Zufuhr des Heißgases in die Entnahmesonde (1) so eingestellt wird, dass der zugeführte Volumenstrom des Abgases in die Entnahmesonde (1) in einem Bereich zwischen 0,5 l/Min bis 5 l/Min liegt.

11. Verfahren nach Anspruch 10,
bei dem nach fest vorgegebenen Zeitzyklen die Abführungsleitung für das Meßgas (5) mit einer Dauerspülung und die mit Entnahmesonde (1) einer pulsierenden Spülung beaufschlagt wird.

12. Verfahren nach Anspruch 10 oder 11,
bei dem der Zeitzyklus für die Spülung mit Meßgas in einem Bereich von 5 min. bis 15 min. liegt.

13. Verfahren nach einem der Ansprüche 10 bis 12
bei das Zeitintervall der pulsierenden Spülung in einem Bereich von 0,5min. bis 5 min. liegt.

14. Verwendung einer Vorrichtung nach einem der Ansprüche 1 bis 9 oder eines Verfahrens nach einem der Ansprüche 10 bis 13 für die Messung des Abgases bei metallurgischen Schmelzprozessen.

15. Verwendung nach Anspruch 14 für Abgasmessungen bei einem Elektrolichtbogenofen.

## Claims

1. Apparatus for continuously drawing off waste gases, in particular for dusty hot gases, comprising
a) an off-take probe (1) with an orifice (3), a discharge line (5) for the test gas, a water jacket (7), at least one flow barrier (8) for particle precipitation,
b) a protective housing (9),
c) a purging unit (12) with a first supply line (6) and a second supply line (13) for the purging medium,
**characterized in that** the purging unit (12) is connected to the discharge line (5) for the test gas via the second supply line (13) for the purging medium, and to the off-take probe (1) via the first supply line (6) for the purging medium.

2. Apparatus according to Claim 1, **characterized in that** the diameter d_{B} of the discharge line (5) for the test gas lies in the range of 1.2 to 1.6 times the diameter d_{E} (4) of the orifice (3).

3. Apparatus according to Claim 1 or 2, **characterized in that** the input diameter D (10) of the protective housing (9) lies in the range of 15 to 20 times the diameter d_{E} (4) of the orifice (3) of the off-take probe (1).

4. Apparatus according to one of Claims 1 to 3, **characterized in that** the total length of the flow barriers (8) is at least 75% of the circumference, referred to the outside diameter d_{A} (2) of the off-take probe (1).

5. Apparatus according to one of Claims 1 to 4, **characterized in that** two flow barriers each of a length of approximately 50% of the annular gap (35) lying between the outer surface of the off-take probe (1) and inner surface of the protective housing (9) are arranged offset from one another along the longitudinal probe axis, the two surfaces completely covering the cross-sectional surface of the annular gap (35).

6. Apparatus according to Claim 5, **characterized in that** the first flow barrier (8) is withdrawn from the base of the protective housing (9) approximately by 1.2 times (L1) the protective housing diameter D, and the second flow barrier (8) is withdrawn from the base of the protective housing (9) approximately by 2.1 times (L2) the protective housing diameter D.

7. Apparatus according to one of Claims 1 to 6, **characterized in that** the flow barriers (8) are arranged as spacers between the protective housing (9) and off-take probe (1).

8. Apparatus according to one of Claims 1 to 7, **characterized in that** the protective housing (9) has a cooling water jacket (11).

9. Apparatus according to one of Claims 1 to 8, **characterized in that** the apparatus has control devices for applying continuous purging to the discharge line (5) for the test gas and pulsed purging to the off-take probe (1), this being done according to a prescribed timing cycle.

10. Method for continuously drawing off waste gases, in particular for dusty hot gases, in which the test gas is drawn off from an off-take probe (1) via a discharge line (5), in which the off-take probe (1) is fed a purging medium via a first supply line (6), while a purging medium is guided into the discharge line (5) for the test gas via a second supply line (13), in which the off-take probe (1) is cooled with the aid of a water jacket (7), and in which at least one flow barrier (8) is used to set the supply of the hot gas into the off-take probe (1) such that the supplied volume flow of the waste gas into the off-take probe (1) lies in a range of between 0.5 1/min to 5 1/min.

11. Method according to Claim 10, in which continuous purging is applied to the discharge line (5) for the test gas and pulsed purging is applied to the off-take probe (1), this being done according to permanently prescribed timing cycles.

12. Method according to Claim 10 or 11, in which the timing cycle for the purging with test gas lies in a range of 5 min to 15 min.

13. Method according to one of Claims 10 to 12, in which the time interval of the pulsed purging lies in a range of 0.5 min to 5 min.

14. Use of an apparatus according to one of Claims 1 to 9 or of a method according to one of Claims 10 to 13 for measuring the waste gas during metallurgical melting processes.

15. Use according to Claim 14 for waste gas measurements in an electric-arc furnace.

## Revendications

1. Dispositif pour le prélèvement en continu de gaz d'échappement, en particulier pour des gaz chauds contenant de la poussière, constitué :
a) d'une sonde de prélèvement (1) avec une ouverture (3), une conduite d'évacuation (5) pour le gaz de mesure, une enveloppe d'eau (7), au moins une barrière à l'écoulement (8) pour l'élimination des particules,
b) un pot de protection (9),
c) une unité de rinçage (12) avec une première (6) et une deuxième (13) conduite d'alimentation pour le milieu de rinçage,
**caractérisé en ce que** l'unité de rinçage (12) est connectée, par le biais de la deuxième conduite d'alimentation (13) pour le milieu de rinçage, à la conduite d'évacuation (5) pour le gaz de mesure, ainsi que par le biais de la première conduite d'alimentation (6) pour le milieu de rinçage à la sonde de prélèvement (1).

2. Dispositif selon la revendication 1,
**caractérisé en ce que**
le diamètre d_{B} de la conduite d'évacuation (5) pour le gaz de mesure est compris dans une plage de 1,2 à 1,6 fois le diamètre d_{E} (4) de l'ouverture (3).

3. Dispositif selon la revendication 1 ou 2,
**caractérisé en ce que**
le diamètre d'entrée D (10) du pot de protection (8) est compris dans une plage de 15 à 20 fois le diamètre d_{E} (4) de l'ouverture (3) de la sonde de prélèvement (1).

4. Dispositif selon l'une quelconque des revendications 1 à 3,
**caractérisé en ce que**
la longueur totale des barrières à l'écoulement (8) vaut au moins 75 % de la périphérie, par rapport au diamètre extérieur d_{A} (2) de la sonde de prélèvement (1).

5. Dispositif selon l'une quelconque des revendications 1 à 4,
**caractérisé en ce que**
2 barrières à l'écoulement d'une longueur d'environ respectivement 50 % de la fente annulaire (35) située entre la surface extérieure de la sonde de prélèvement (7) et la surface intérieure du pot de protection (9) sont disposées de manière décalée l'une par rapport à l'autre le long de l'axe longitudinal de la sonde, leurs deux surfaces recouvrant complètement la surface en section transversale de la fente annulaire (35).

6. Dispositif selon la revendication 5,
**caractérisé en ce que**
la première barrière à l'écoulement (8) est renfoncée d'environ 1,2 fois (L1) le diamètre du pot de protection (D) et la deuxième barrière à l'écoulement (8) est renfoncée d'environ 2,1 fois (L2) le diamètre du pot de protection (D) depuis le fond du pot de protection (9).

7. Dispositif selon l'une quelconque des revendications 1 à 6,
**caractérisé en ce que**
les barrières à l'écoulement (8) sont disposées sous forme d'éléments d'espacement entre le pot de protection (9) et la sonde de prélèvement (1).

8. Dispositif selon l'une quelconque des revendications 1 à 7,
**caractérisé en ce que**
le pot de protection (9) présente une enveloppe d'eau de refroidissement (11).

9. Dispositif selon l'une quelconque des revendications 1 à 8,
**caractérisé en ce que**
le dispositif présente des systèmes de commande afin de solliciter la conduite d'évacuation (5) pour le gaz de mesure avec un rinçage permanent et la sonde de prélèvement (1) avec un rinçage pulsé d'après un cycle temporel prédéfini.

10. Procédé pour le prélèvement en continu de gaz d'échappement, en particulier pour des gaz chauds contenant de la poussière, dans lequel on prélève le gaz de mesure d'une sonde de prélèvement, par le biais d'une conduite d'évacuation (5), un milieu de rinçage étant acheminé à la sonde de prélèvement (1) par le biais d'une première conduite d'alimentation (6), tandis qu'un milieu de rinçage est guidé dans la conduite d'évacuation (5) pour le gaz de mesure par le biais d'une deuxième conduite d'alimentation (13), la sonde de prélèvement (1) étant refroidie à l'aide d'une enveloppe d'eau (7), l'alimentation en gaz chaud dans la sonde de prélèvement (1) à l'aide d'au moins une barrière à l'écoulement (8) étant ajustée de telle sorte que le débit volumique de gaz d'échappement acheminé dans la sonde de prélèvement (1) soit compris dans une plage de 0,5 1/min à 5 l/min.

11. Procédé selon la revendication 10,
dans lequel, d'après des cycles temporels prédéfinis fixement, la conduite d'évacuation (5) pour le gaz de mesure est sollicitée avec un rinçage permanent et la sonde de prélèvement (1) avec un rinçage pulsé.

12. Procédé selon la revendication 10 ou 11,
dans lequel le cycle temporel pour le rinçage avec le gaz de mesure est compris dans une plage de 5 min à 15 min.

13. Procédé selon l'une quelconque des revendications 10 à 12,
dans lequel l'intervalle temporel entre les rinçages pulsés est compris dans une plage de 0,5 min à 5 min.

14. Utilisation d'un dispositif selon l'une quelconque des revendications 1 à 9 ou d'un procédé selon l'une quelconque des revendications 10 à 13 pour la mesure du gaz d'échappement dans les processus de fusion métallurgiques.

15. Utilisation selon la revendication 14, pour des mesures de gaz d'échappement dans un four à arc électrique.
